# FASCICULE DE BREVET EUROPEEN

(11) **EP 0 929 486 B1**
(45) Date de publication et mention de la délivrance du brevet: **10.05.2000**
(21) Numéro de dépôt: 97927235.8
(22) Date de dépôt: 04.06.1997
(51) Int. Cl.: B65G 51/03

(54) **DISPOSITIF DE CONVOYAGE D'OBJETS MUNIS D'UN GOULOT OU SIMILAIRE TELS QUE PAR EXEMPLE DES BOUTEILLES, FLACONS OU AUTRES ET DISPOSITIF DE CHARGEMENT DE TELS OBJETS CONCUS POUR LEDIT DISPOSITIF DE CONVOYAGE**
VORRICHTUNG ZUM FÖRDERN VON GEGENSTÄNDEN WIE FLASCHEN SOWIE ZUGEHÖRIGE BELADEEINRICHTUNG
DEVICE FOR CONVEYING OBJECTS HAVING A NECK OR THE LIKE, SUCH AS FOR EXAMPLE BOTTLES, FLASKS AND THE LIKE AND DEVICE FOR LOADING SAME DESIGNED FOR THE SAID CONVEYING DEVICE

(30) Priorité: 04.06.1996 FR 9607018
(43) Date de publication de la demande: 21.07.1999
(73) Titulaire: SIDEL Société anonyme, 76930 Octeville-sur-Mer (FR)
(72) Inventeur: Bernard, Frédéric, 59650 Villeneuve d'Ascq (FR)
(74) Mandataire: Duthoit, Michel
(86) Numéro de dépôt international: FR9700990
(87) Numéro de publication internationale: WO9746472

(56) Documents cités:
- WO-A-95/30611
- US-A- 5 299 889

## Description

La présente invention concerne un dispositif de convoyage d'objets munis d'un goulot ou similaire tels que par exemple des bouteilles, flacons ou autres, ainsi qu'un dispositif de chargement de tels objets conçus pour ledit dispositif de convoyage.

Bien que plus particulièrement prévue pour des bouteilles, la présente invention pourra également être utilisée dans tous les secteurs de l'activité économique dans lesquels on est amené à déplacer des objets tels que, notamment, des contenants, munis d'un goulot ou similaire.

Actuellement, dans le domaine du convoyage des bouteilles, on connaît, par exemple, des dispositifs constitués, d'une part, d'une chambre de compression, permettant la projection d'un flux d'air sur lesdites bouteilles de manière à les entraîner selon la direction de convoyage, et, d'autre part, d'un rail, apte à soutenir lesdites bouteilles par la collerette généralement prévue au niveau de leur goulot (voir par ex. le document US-A-5 299 889).

Ledit rail comprend le plus souvent deux guides, prévus sous la chambre de compression, cette dernière étant placée au-dessus des bouteilles pour permettre la projection dudit flux d'air sur leur goulot.

De tels dispositifs présentent de nombreux inconvénients. En effet, afin d'éviter les oscillations des bouteilles dans un plan ortogonal à la direction de convoyage, ils nécessitent l'utilisation d'éléments de guidage latéraux, prévus au niveau du corps desdites bouteilles.

Il est d'ailleurs à noter qu'en cas de changement du type ou du format desdites bouteilles, il est alors nécessaire d'effectuer de nombreux et coûteux réglages sur lesdits éléments de guidage latéraux, tout le long de la trajectoire de convoyage.

De plus, de tels dispositifs ne permettent pas d'éviter les oscillations longitudinales des bouteilles lors de leur transport et engendrent trop souvent des chocs entre bouteilles ou encore leur « mise en éventail » risquant de bloquer le convoyage.

En outre, pour pouvoir être transportées par les dispositifs de convoyage actuellement connus, les bouteilles doivent présenter des cotes dimensionnelles bien précises, notamment au niveau de leur collerette. De plus, elles ne peuvent pas être réalisées en un matériau susceptible de s'échauffer trop rapidement par frottements, tel que le PVC.

Il est également à noter que de tels dispositifs n'autorisent pas l'obtention d'un niveau d'hygiène satisfaisant. En effet, le jet d'air propulsé sur les bouteilles au niveau de leur goulot rentre à l'intérieur desdites bouteilles, risquant ainsi de les contaminer, à moins d'un filtrage préalable, complexe et de coût élevé si l'on souhaite qu'il soit fiable.

Le but de la présente invention est de pallier les inconvénients précités en proposant un dispositif de convoyage d'objets dont le guidage soit simplifié.

Un autre but de la présente invention est de proposer un dispositif de convoyage d'objets, munis d'un goulot et d'un corps, dont les caractéristiques soient indépendantes des dimensions et/ou de la forme du corps desdits objets.

Un autre but de la présente invention est de proposer un dispositif de convoyage d'objets, munis d'un goulot et d'un corps, qui permette d'éviter l'utilisation d'éléments de guidage latéraux au niveau du corps desdits objets.

Un autre but de la présente invention est de proposer un dispositif de convoyage d'objets qui permette d'éviter les oscillations longitudinales desdits objets lors de leur transport et/ou l'apparition de phénomènes de « mise en éventail ».

Un autre but de la présente invention est de proposer un dispositif de convoyage d'objets qui permette de diminuer les chocs entre lesdits objets déplacés.

Un autre but de la présente invention est de proposer un dispositif de convoyage d'objets qui permette d'améliorer les conditions d'hygiène dans lesquelles lesdits objets sont transportés.

Un autre but de la présente invention est de proposer un dispositif de convoyage d'objets qui puisse être appliqué, notamment, à l'entraînement de bouteilles dont les tolérances dimensionnelles au niveau de leur collerette sont larges ou même démunies de collerette.

Un autre but de la présente invention est de proposer un dispositif de convoyage d'objets permettant le transport de ces derniers indépendamment de la matière qui les constitue.

Un autre but de la présente invention est de proposer un dispositif de chargement d'objets conçus pour un dispositif de convoyage desdits objets qui permette de le faire fonctionner en continu et à grande cadence.

D'autres buts et avantages de la présente invention apparaîtront au cours de la description qui va suivre qui n'est donnée qu'à titre indicatif et qui n'a pas pour but de la limiter.

La présente invention concerne un dispositif de convoyage d'objets munis d'un goulot ou similaire tels que, par exemple, des bouteilles, flacons ou autres, selon une direction donnée, constitué, au moins, d'une chambre de compression, apte à permettre la projection d'un flux d'air sur lesdits objets, selon la direction de convoyage, et d'un rail support, orienté selon ladite direction de convoyage, caractérisé par le fait qu'il comprend des navettes de transport, assujetties d'une part au goulot desdits objets, et coopérant, d'autre part, avec ledit rail.

La présente invention concerne également un dispositif de chargement d'objets munis d'un goulot ou similaire tels que, par exemple, des bouteilles, flacons ou autres, conçus pour un dispositif de convoyage dans lequel lesdits objets sont munis d'une navette de transport, au niveau de leur goulot, caractérisé par le fait qu'il comprend :
- des moyens pour faire défiler lesdits objets destinés à être équipés d'une navette,
- des moyens pour faire défiler lesdites navettes destinées à être disposées sur lesdits objets,
- des moyens pour entraîner en vis-à-vis lesdites navettes et lesdits objets, selon une trajectoire donnée,
- des moyens pour assujettir lesdites navettes au goulot desdits objets, aptes à se déplacer de manière synchronisée avec lesdites navettes et lesdits objets, selon ladite trajectoire donnée.

La présente invention sera mieux comprise à la lecture de la description suivante, accompagnée des dessins en annexe qui en font partie intégrante et parmi lesquels :
- la figure 1 décrit, en perspective, selon un plan de coupe transversal, un exemple de dispositif de convoyage conforme à l'invention,
- la figure 2 est une vue de dessus d'un des éléments du dispositif de convoyage conforme à l'invention,
- la figure 3 est une vue de coupe, selon la ligne III-III représentée à la figure 2, de l'élément illustré à la même figure,
- la figure 4 est une vue, en demi coupe, d'un second exemple de réalisation de l'élément représenté à la figure 3 précédente,
- la figure 5 est une vue, en coupe, d'un troisième exemple de réalisation de l'élément représenté à la figure 2 précédente,
- la figure 6 est une vue latérale illustrant, de manière schématique, un dispositif de chargement conçu pour un dispositif de convoyage, conformes à l'invention,
- la figure 7 est une vue de dessus d'après la figure 6.

La présente invention concerne un dispositif de convoyage d'objets munis d'un goulot ou similaire tels que, par exemple, des bouteilles, flacons ou autres, ainsi qu'un dispositif de chargement de tels objets, conçu pour ledit dispositif de convoyage.

Bien que plus particulièrement prévue pour des bouteilles, la présente invention trouvera également ses utilisations dans tous les secteurs de l'activité économique dans lesquels on souhaite transporter des objets tels que, notamment, des contenants, munis d'un goulot ou similaire.

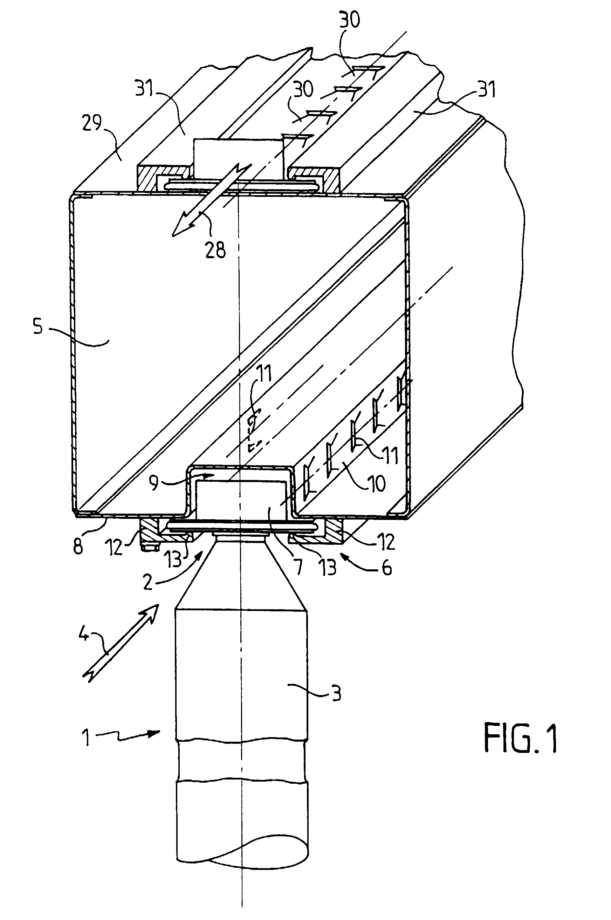

Comme représenté à la figure 1, le dispositif conforme à l'invention permet le convoyage d'objets 1, munis d'un goulot 2 et, notamment, d'un corps 3, selon une direction donnée, illustrée par la flèche repérée 4.

Ledit dispositif est constitué, au moins, d'une chambre de compression 5, apte à permettre la projection d'un flux d'air sur lesdits objets 1, selon la direction de convoyage 4, et d'un rail support 6, orienté selon ladite direction de convoyage 4.

Lesdits objets 1 sont ainsi entraînés, grâce audit flux d'air, par exemple, selon une direction de convoyage 4 sensiblement horizontale, lesdits objets étant, quant à eux, orientés sensiblement verticalement.

Un tel résultat est obtenu, selon des techniques connues de l'homme de l'art, notamment, par la propulsion d'air, par exemple, par l'intermédiaire de ventilateurs, non représentés, dans ladite chambre 5. L'air se trouve alors comprimé à l'intérieur de cette dernière puis projeté à l'extérieur, selon un flux unidirectionnel, à travers des fentes, au profil adapté, prévues sur une ou des parois de ladite chambre de compression 5.

Selon l'invention, ledit dispositif comprend des navettes de transport 7, assujetties, d'une part au goulot 2 ou similaire desdits objets 1, et coopérant, d'autre part, avec ledit rail support 6.

La chambre de compression 5 est disposée, notamment, en continu tout le long de la trajectoire de convoyage.

Par ailleurs, selon l'exemple de réalisation illustré, ladite chambre de compression 5 est prévue au-dessus desdits objets 1 à convoyer et permet la projection dudit flux d'air au niveau du goulot 2 desdits objets 1.

Le rail support 6 et ledit flux d'air sont ainsi, par exemple, situés verticalement au même niveau, facilitant, notamment, le guidage desdits objets 1 convoyés par l'intermédiaire desdites navettes de transport 7.

La chambre de compression 5 présente, par exemple, une structure tubulaire de section sensiblement rectangulaire et/ou carrée, la projection dudit flux d'air sur les objets 1 étant effectuée au niveau de sa paroi inférieure 8.

Pour cela, ladite chambre de compression 5 comprend, par exemple, sensiblement au milieu de ladite paroi inférieure 8, un canal 9, orienté selon la direction de convoyage 4, présentant, notamment, un profil transversal en forme de U inversé. Les parois transversales 10 dudit canal sont munies, par exemple, comme évoqué plus haut, de fentes 11, aptes à permettre la projection dudit flux d'air.

Toujours selon l'exemple de réalisation représenté, le rail support 6 est constitué, par exemple, de deux guides 12, notamment assujettis à la paroi inférieure 8 de la chambre de compression 5, de chaque côté du canal 9.

Lesdits guides 12 présentent, par exemple, une forme de L, situé en vis-à-vis, les branches verticales desdits L étant assujetties à la chambre de compression 5 tandis que leurs branches horizontales sont munies, à leur extrémité, d'une surépaisseur 13, apte à supporter lesdites navettes de transport 7.

On pourra remarquer que lesdites surépaisseurs 13 facilitent ainsi le convoyage des objets 1 en limitant la surface de contact entre lesdites navettes de transport 7 et ledit rail support 6.

Comme évoqué plus haut concernant la chambre de compression 5, ledit rail support 6 est prévu, par exemple, de manière continue tout le long de la trajectoire de convoyage.

Lesdites navettes 7 présentent, par exemple, une surface de dimension sensiblement égale ou supérieure à la section horizontale d'encombrement maximum desdits objets 1.

Ainsi, par exemple en cas de convoyage d'une bouteille 1, notamment de forme cylindrique, la navette de transport 7 présente une surface horizontale de dimension supérieure ou sensiblement égale à celle de la section transversale dudit cylindre.

Plus précisément, en cas, par exemple, comme développé plus loin, d'utilisation d'une navette 7 sensiblement circulaire, le diamètre de cette dernière est supérieure ou sensiblement égal au diamètre du corps de ladite bouteille 1.

De plus, selon le mode de réalisation représenté, les navettes 7 sont prévues, éventuellement, aptes à boucher le goulot 2 desdits objets 1. Elles permettent ainsi de les isoler de l'extérieur et améliorent les conditions d'hygiène du convoyage.

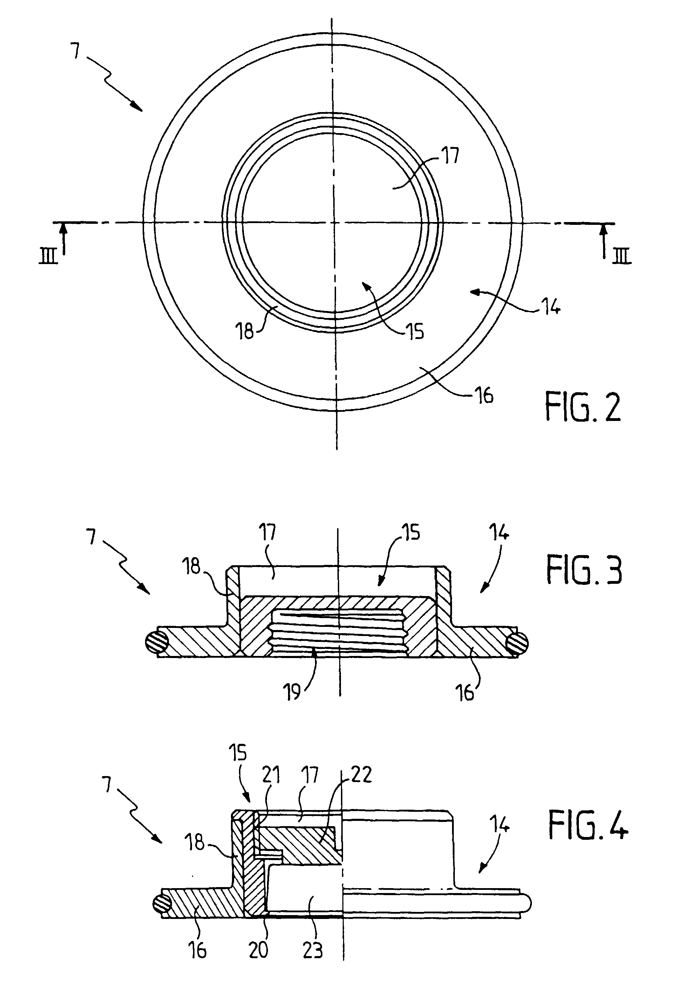

Si l'on se reporte maintenant aux figures 2 et 3, on constate que lesdites navettes 7 sont constituées, par exemple d'un premier élément 14, de dimension fixe, coopérant avec le rail support 6, et d'un second élément, constituant une entretoise 15, entre ledit premier organe 14 et le goulot 2 desdits objets 1, de dimension variable en fonction du diamètre dudit goulot 2.

Ledit premier organe 14 est constitué, notamment, d'un disque 16, apte à glisser sur ledit rail 6, muni d'un orifice central 17 à l'intérieur duquel est assujetti ledit second élément 15. Ledit disque 16 comprend également, par exemple, autour dudit orifice central 17, une protubérance centrale 18, notamment tubulaire de section cylindrique.

Selon cet exemple de réalisation, ledit disque 16 glisse sur les surépaisseurs 13 des guides 12 constituant le rail support 6. De plus, ledit disque 16 est muni, à sa périphérie, d'un joint torique 19, apte à amortir les chocs entre lesdites navettes 7.

Ces dernières présentent, en outre, notamment, au niveau desdites entretoises 15, une cavité centrale 19, munie d'un taraudage, apte à coopérer avec le filetage prévu sur le goulot 2 desdits objets 1, de manière à les boucher.

Selon un premier exemple de réalisation, non représenté, lesdites navettes 7 sont entièrement monoblocs.

Selon un autre mode de réalisation, correspondant à celui illustré à la figure 3, ledit premier élément 14 et ladite entretoise 15 sont distincts, ladite cavité interne 19 étant formée directement dans ladite entretoise 15.

Selon cet exemple de réalisation, ledit premier élément 14 et ladite entretoise 15 sont assemblés, par exemple, par collage, clavetage ou autre.

Si l'on se reporte maintenant à la figure 4, on constate que, selon un mode de réalisation différent, ladite entretoise 15 est prévue tubulaire et présente à son extrémité inférieure un collet interne 20 et à son extrémité supérieure un taraudage 21, ladite navette 7 comprenant, en outre, un écrou 22, coopérant avec ledit taraudage, et un bouchon 23, identique à celui destiné à boucher lesdits objets 1, ladite entretoise 15 permettant le maintien dudit bouchon 23 entre ledit collet 20 et ledit écrou 22.

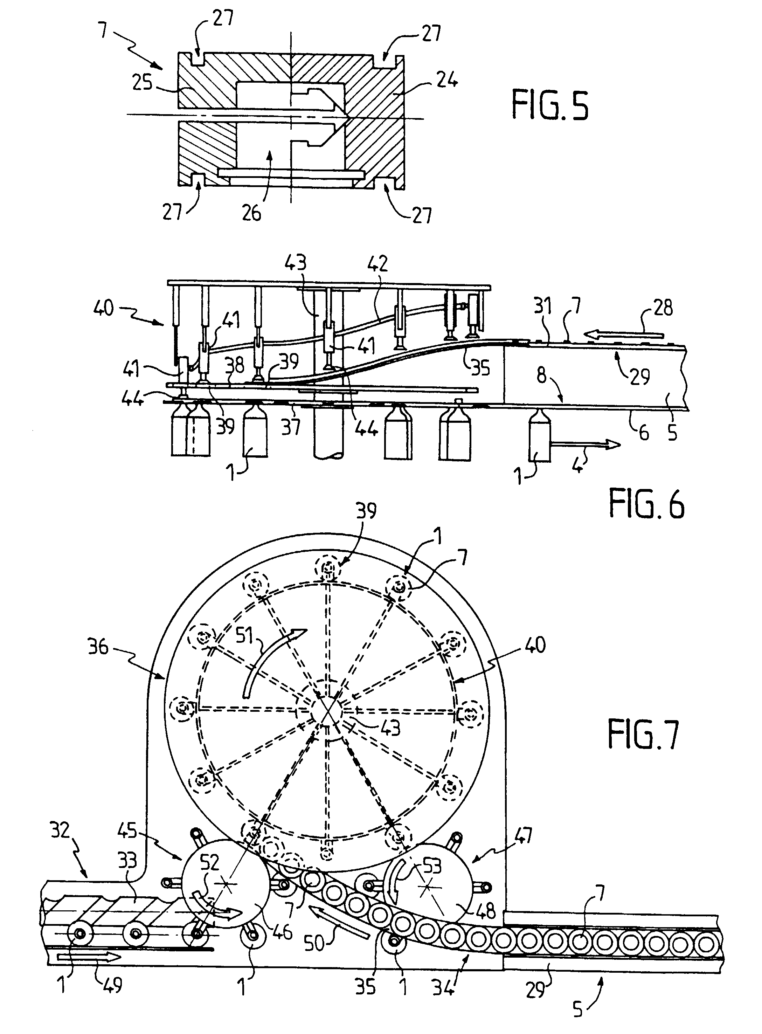

A la figure 5, un mode supplémentaire de réalisation des navettes 7 est représenté. Selon cet exemple, lesdites navettes 7 sont constituées de deux éléments 24, 25, s'emboîtant l'un dans l'autre et formant une cavité interne 26, apte à permettre le maintien du goulot 2 desdits objets 1 convoyés.

Toujours selon cet exemple de réalisation, lesdites navettes 7 sont munies d'au moins deux gorges latérales 27, aptes à permettre, par coopération avec des cames de guidage, l'ouverture et/ou la fermeture desdites navettes 7 pour le dégagement et/ou la mise en place desdits objets 1.

Il est également à noter qu'une navette 7 munie d'un parapluie, plongeant dans ledit corps 3 des objets 1 pour permettre leur maintien pourrait également être envisagée.

Si l'on se reporte de nouveau à la figure 1, on constate que, dans le cas d'utilisation de navettes 7 telle que représentées aux figures 3 ou 4, ledit disque 16 est prévu, par exemple, entre le rail support 6 et la paroi inférieure 8 de la chambre de compression 5 tandis que ladite protubérance centrale 18 se situe, au moins partiellement, à l'intérieur du canal 9.

A titre de remarque, il est à noter que, dans le cas d'utilisation de navettes 7 fonctionnant par emboîtement, comme illustré à la figure 5, lesdites navettes 7 seraient alors prévues, presque totalement, à l'intérieur dudit canal 9.

Par ailleurs, afin d'éviter d'éventuelles difficultés de surcompression à l'intérieur des objets 1, un évent pourrait être envisagé sur lesdites navettes 7.

Cela étant, d'après l'exemple de réalisation illustré, ladite chambre de compression 5 est également apte à permettre la projection d'un flux d'air, selon une direction opposée à celle du convoyage desdits objets 1, comme représenté par la flèche repérée 28, de manière à permettre le retour des navettes 7.

Ladite chambre de compression 5 présente ainsi, par exemple, sur sa paroi supérieure 29 des fentes 30, aptes à permettre la projection dudit flux d'air dans ladite direction 28 opposée à celle du convoyage, la projection du flux d'air selon ladite direction 4 de convoyage étant réalisée, comme évoqué plus haut, par exemple, au niveau de la paroi inférieure 8 de ladite chambre de compression 5.

De plus, pour permettre le retour des navettes 7, le dispositif de convoyage conforme à l'invention comprend, notamment, des guides 31 assujettis à la paroi supérieure 29 de la chambre de compression 5, de part et d'autre du flux d'air orienté selon ladite direction 28, lesdits guides 31 étant, par exemple, semblables aux guides 12 utilisés dans la partie basse de ladite chambre de compression 5.

Les guides 12, 31 et/ou leur surépaisseur 13 et/ou les navettes 7 et/ou leur disque 16 sont constitués, par exemple, de matériaux facilitant leur glissement l'un sur l'autre.

La présente invention concerne également un dispositif de chargement d'objets 1 munis d'un goulot 2 ou similaire tels que, par exemple, des bouteilles, flacons ou autres, conçus pour permettre la mise en place desdits objets 1 sur le dispositif de convoyage, évoqué plus haut, dans lequel lesdits objets 1 sont munis d'une navette de transport 7 au niveau de leur goulot 2.

Si l'on se reporte maintenant aux figures 6 et 7, on constate que ledit dispositif de chargement comprend, selon l'invention, des moyens 32 pour faire défiler, comme illustré par la flèche repérée 49, lesdits objets 1 destinés à être équipés d'une navette 7. Il s'agit, par exemple, d'une vis sans fin 33, apte à régulariser le flux amont desdits objets 1 pour fournir, à grande cadence, un débit continu.

Dans le cas de l'application de l'invention au chargement et au convoyage de bouteilles, ces dernières peuvent provenir, par exemple, d'une souffleuse.

Ledit dispositif de chargement conforme à l'invention comprend, en outre, des moyens 34 pour faire défiler, comme illustré par la flèche repérée 50, lesdites navettes 7 destinées à être disposées sur ledits objets 1. Il s'agit, par exemple, d'une bande de guidage gravitaire 35, en provenance de la paroi supérieure 29 de la chambre de compression 5.

Le dispositif de chargement conforme à l'invention comprend, en outre, des moyens 36 pour entraîner en vis-à-vis lesdites navettes 7 et lesdits objets 1, selon une trajectoire donnée, par exemple circulaire, comme illustré par la flèche repérée 51.

Ainsi, lesdits moyens pour entraîner 36 sont constitués, par exemple, d'un plateau à pinces 37, apte à maintenir lesdits objets 1, notamment au niveau de leur goulot 2, et d'un plateau 38, muni d'orifices 39, aptes à accueillir lesdites navettes 7, lesdits plateaux 37, 38 tournant, en vis-à-vis, à la même vitesse de manière à faire correspondre en regard l'un et l'autre lesdits orifices 39 et l'extrémité de maintien des pinces du plateau 37.

Ledit dispositif de chargement d'objets 1 comprend, en outre, des moyens 40 pour assujettir lesdites navettes 7 au goulot 2 desdits objets, lesdits moyens 40 pour assujettir étant aptes à se déplacer de manière synchronisée avec lesdites navettes 7 et lesdits objets 1, selon ladite trajectoire donnée.

Lesdits moyens 40 pour assujettir sont ainsi constitués, selon l'exemple de réalisation représenté, d'un carrousel de pistons 41, orientés verticalement, coopérant avec une came de guidage 42, prévue au-dessus desdits plateaux 37, 38 au-dessus de leur périphérie, par l'intermédiaire de supports télescopiques 43.

Un piston 41 est prévu, notamment, au-dessus de chaque orifice 39 et leur carroussel tourne, notamment, à la même vitesse que lesdits plateaux 37, 38, par exemple autour du même arbre d'entraînement 43.

Grâce à ladite came de guidage 42, lesdits pistons 41 sont abaissés et permettent, grâce, par exemple, à des ventouses 44 et des moyens de vissage, non représentés, de placer lesdites navettes 7 sur lesdits objets 1, au niveau de leur goulot 2, le vissage s'effectuant, notamment, au niveau du plateau à pinces 37.

Le dispositif de chargement comprend, en outre, par exemple, des moyens 45 de transfert, comme illustré par la flèche repérée 52, desdits objets 1 sur le plateau à pinces 37. Il s'agit, notamment, d'une roue 46, munie également de pinces dont les extrémités sont aptes à coopérer, de manière tangente, avec les pinces prévues sur ledit plateau à pinces 37.

Le dispositif de chargement conforme à l'invention comprend, en outre, selon le mode de réalisation illustré, des moyens 47 de transfert, comme illustré par la flèche repérée 53, desdits objets 1 équipés de navettes 7, notamment vers la paroi inférieure 8 de la chambre de compression 5 du dispositif de convoyage.

Il s'agit, par exemple, d'une roue 48, munie de pinces, sensiblement identique à ladite roue 46 précédente.

Naturellement, d'autres mises en oeuvre, à la portée de l'homme de l'art, auraient pu être envisagées sans pour autant sortir du cadre de la présente invention.

A titre de remarque, il est à noter que, après convoyage, lesdits objets 1 peuvent être déchargés, par exemple, grâce à un dispositif de fonctionnement sensiblement identique au dispositif de chargement évoqué ci-dessus.

## Revendications

1. Dispositif de convoyage d'objets (1) munis d'un goulot (2) ou similaire, tels que, par exemple des bouteilles, flacons ou autres, selon une direction donnée, constitué au moins d'une chambre de compression (5), apte à permettre la projection d'un flux d'air sur lesdits objets (1), selon la direction de convoyage, et d'un rail support (6), orienté selon ladite direction de convoyage, caractérisé par le fait qu'il comprend des navettes (7) de transport, assujetties, d'une part au goulot (2) desdits objets (1), et coopérant, d'autre part, avec ledit rail support (6).

2. Dispositif de convoyage selon la revendication 1, comprenant une chambre de compression (5), prévue au-dessus desdits objets (1) à convoyer, apte à permettre la projection dudit flux d'air au niveau dudit goulot (2) desdits objets (1).

3. Dispositif de convoyage selon la revendication 1, dans lequel lesdites navettes (7) présentent une surface de dimension sensiblement égale ou supérieure à la section horizontale d'encombrement maximum desdits objets (1).

4. Dispositif de convoyage selon la revendication 1, dans lequel lesdites navettes (7) sont prévues aptes à boucher le goulot (2) desdits objets (1).

5. Dispositif de convoyage selon la revendication 1, dans lequel lesdites navettes (7) sont constituées d'un premier élément (14), de dimension fixe, coopérant avec le rail support (6), et d'un second élément, constituant une entretoise (15), entre ledit premier organe (14) et le goulot (2) desdits objets (1), de dimensions variables en fonction du diamètre dudit goulot (2).

6. Dispositif de convoyage selon la revendication 5, dans leque' ledit premier organe (14) est constitué d'un disque (16), apte à glisser sur ledit rail (6), muni d'un orifice central (17) à l'intérieur duquel est assujetti ledit second élément (15).

7. Dispositif de convoyage selon la revendication 5, dans lequel ladite entretoise (15) est prévue tubulaire et présente à son extrémité inférieure un collet interne (20) et à son extrémité supérieure un taraudage (21), ladite navette (7) comprenant, en outre, un écrou (22), coopérant avec ledit taraudage (21), et un bouchon (23) identique à celui destiné à boucher lesdits objets (1), ladite entretoise (15) permettant le maintien dudit bouchon (23) entre ledit collet (20) et ledit écrou (22).

8. Dispositif de convoyage selon la revendication 1, dans lequel ladite chambre de compression (5) est également apte à permettre la projection d'un flux d'air selon une direction opposée à celle du convoyage desdits objets (1) de manière à permettre le retour des navettes (7).

9. Dispositif de convoyage selon la revendication 8, dans lequel ladite chambre de compression (5) présente sur sa paroi supérieure (29) des fentes (30), aptes à permettre la projection dudit flux d'air dans ladite direction opposée à celle du convoyage, la projection du flux d'air selon ladite direction de convoyage étant réalisée au niveau de la paroi inférieure (8) de ladite chambre (5).

10. Dispositif de chargement d'objets (1) munis d'un goulot (2) ou similaire tels que, par exemple, des bouteilles, flacons ou autres, conçus pour un dispositif de convoyage, selon la revendication 1, dans lequel lesdits objets (1) sont munis d'une navette de transport (7), au niveau de leur goulot (2), caractérisé par le fait qu'il comprend :
- des moyens (32) pour faire défiler lesdits objets (1) destinés à être équipés d'une navette (7),
- des moyens (34) pour faire défiler lesdites navettes (7) destinées à être disposées sur lesdits objets (1),
- des moyens (36) pour entraîner, en vis-à-vis, lesdites navettes (7) et lesdits objets (1), selon une trajectoire donnée,
- des moyens (40) pour assujettir lesdites navettes (7) au goulot (2) desdits objets (1), aptes à se déplacer de manière synchronisée avec lesdites navettes (7) et lesdits objets (1), selon ladite trajectoire donnée.

## Patentansprüche

1. Vorrichtung zur Beförderung in eine bestimmte Richtung von mit einem Hals (2) oder dergleichen versehenen Gegenständen (1), zum Beispiel Flaschen, Flakons oder dergleichen, bestehend aus wenigstens einer Kompressionskammer (5), die geeignet ist, das Ausstoßen eines Luftstroms auf die erwähnten Gegenstände (1) in die Beförderungsrichtung zu ermöglichen, und aus einer Stützschiene (6), die nach der genannten Beförderungsrichtung orientiert ist, dadurch gekennzeichnet, daß sie Beförderungslängsblöcke (7) umfaßt, die einerseits an dem Hals (2) der genannten Gegenstände (1) befestigt sind und andererseits mit der genannten Stützschiene (6) zusammenwirken.

2. Beförderungsvorrichtung nach Anspruch 1, umfassend eine Kompressionskammer (5), die oberhalb der genannten zu befördernden Gegenstände (1) vorgesehen und geeignet ist, das Ausstoßen des genannten Luftstroms im Bereich des genannten Halses (2) der genannten Gegenstände (1) zu ermöglichen.

3. Beförderungsvorrichtung nach Anspruch 1, bei der die genannten Schützen (7) eine Oberfläche aufweisen, deren Abmessung im wesentlichen gleich oder größer ist als der horizontale Querschnitt der größten Abmessung der genannten Gegenstände (1).

4. Beförderungsvorrichtung nach Anspruch 1, bei der die genannten Längsblöcke (7) geeignet vorgesehen sind, den Hals (2) der genannten Gegenstände (1) zu verstopfen.

5. Beförderungsvorrichtung nach Anspruch 1, bei der die erwähnten Längsblöcke (7) aus einem ersten Element (14) fester Abmessung, das mit der Stützschiene (6) zusammenwirkt, und aus einem zweiten Element bestehen, das ein Abstandsstück (15) zwischen dem genannten ersten Organ (14) und dem Hals (2) der genannten Gegenstände (1), mit unterschiedlichen Abmessungen in Abhängigkeit von dem Durchmesser des genannten Halses (2), bildet.

6. Beförderungsvorrichtung nach Anspruch 5, bei der das genannte erste Organ (14) aus einer Scheibe (16) besteht, die geeignet ist, über die erwähnte Schiene (6) zu gleiten und mit einer Zentralöffnung (17) versehen ist, in der das genannte zweite Element (15) befestigt ist.

7. Beförderungsvorrichtung nach Anspruch 5, bei der das genannte Abstandsstück (15) rohrförmig vorgesehen ist und an seinem unteren Ende einen inneren Kragen (20) und an seinem oberen Ende ein Innengewinde (21) aufweist, wobei der genannte Längsblock (7) außerdem eine Mutter (22), die mit dem genannten Innengewinde (21) zusammenwirkt, und einen Stopfen (23) umfaßt, der mit jenem zum Verstopfen der genannten Gegenstände (1) identisch ist, wobei das genannte Abstandsstück (15) das Halten des genannten Stopfens (23) zwischen dem genannten Kragen (20) und der genannten Mutter (22) erlaubt.

8. Beförderungsvorrichtung nach Anspruch 1, bei der die genannte Kompressionskammer (5) ebenfalls geeignet ist, das Ausstoßen des Luftstrahls in einer der Beförderungsrichtung der genannten Gegenstände (1) entgegengesetzten Richtung zu ermöglichen, sodaß die Zurückführung der Längsblöcke (7) ermöglicht wird.

9. Beförderungsvorrichtung nach Anspruch 8, bei der die genannte Kompressionskammer (5) an ihrer oberen Wand (29) Schlitze (30) aufweist, die geeignet sind, das Ausstoßen des erwähnten Luftstrahls in die genannte der Beförderung entgegengesetzte Richtung zu erlauben, wobei das Ausstoßen des Luftstrahls in die genannte Richtung der Beförderung im Bereich der unteren Wand (8) der genannten Kammer (5) erfolgt.

10. Vorrichtung zur Beschickung von mit einem Hals (2) oder dergleichen versehenen Gegenständen (1), wie zum Beispiel Flaschen, Flakons oder dergleichen, die für eine Beförderungsvorrichtung nach Anspruch 1 konzipiert sind, bei der die genannten Gegenstände (1) im Bereich ihres Halses (2) mit Beförderungslängsblöcken (7) versehen sind, dadurch gekennzeichnet, daß sie :
- Mittel (32) für die Zuführung der genannten Gegenstände (1), die mit einem Längsblock (7) auszurüsten sind,
- Mittel (34) für die Zuführung der genannten Längsblöcke (7), die an die genannten Gegenstände (1) anzubringen sind,
- Mittel (36), um die genannten Längsblöcke (7) und die genannten Gegenstände (1) in einer bestimmten Bahn gegenüberliegend anzutreiben,
- Mittel (40) für die Befestigung der genannten Längsblöcke (7) an den Hals (2) der genannten Gegenstände (1), die geeignet sind, sich auf synchronisierte Weise mit den genannten Längsblöcken (7) und den genannten Gegenständen (1) in der erwähnten bestimmten Bahn zu bewegen,
umfaßt.

## Claims

1. Device for conveying objects (1) provided with necks (2) or similar features, such as, for example, bottles, flasks or other items, in a given direction, constituted at least by a compression chamber (5), capable of permitting the projection of a stream of air onto the said objects (1), in the conveying direction, and by a support rail (6), orientated in said conveying direction, characterised by the fact that it comprises transport shuttles (7), secured, on one hand, to the necks (2) of said objects (1), and co-operating, on the other hand, with said support rail (6).

2. Conveying device according to claim 1, comprising a compression chamber (5), provided above said objects (1) to be conveyed, capable of permitting the projection of said stream of air in the area of said necks (2) of said objects (1).

3. Conveying device according to claim 1, in which said shuttles (7) have a surface with a dimension substantially equal to or greater than the horizontal cross-section of maximum size of said objects (1).

4. Conveying device according to claim 1, in which said shuttles (7) are designed to be capable of plugging the necks (2) of said objects (1).

5. Conveying device according to claim 1, in which said shuttles (7) are constituted by a first member (14), of fixed dimensions, co-operating with the support rail (6), and by a second member, constituting a spacer means (15), between said first member (14) and the necks (2) of said objects (1), having dimensions that vary according to the diameters of said necks (2).

6. Conveying device according to claim 5, in which said first member (14) is constituted by a disk (16), capable of sliding over said rail (6), provided with a central orifice (17) inside which is secured said second member (15).

7. Conveying device according to claim 5, in which said spacer means (15) is of tubular design and has, at its lower end, an inner collar (20) and, at its upper end, a threaded portion (21), said shuttle (7) further comprising a nut (22), co-operating with said threaded portion (21), and a plug (23) identical to the ones designed to plug said objects (1), said spacer means (15) enabling said plug (23) to be held between said collar (20) and said nut (22).

8. Conveying device according to claim 1, in which said compression chamber (5) is also capable of permitting the projection of a stream of air in a direction opposite to that of the conveying of said objects (1) so as to enable the shuttles (7) to return.

9. Conveying device according to claim 8, in which said compression chamber (5) has, on its upper wall (29) slits (30), capable of permitting the projection of said stream of air into said direction opposite to that of conveying, the projection of the stream of air in said conveying direction being carried out in the area of the lower wall (8) of said chamber (5).

10. Device for loading objects (1) provided with necks (2) or similar features, such as, for example, bottles, flasks or other items, designed for a conveying device, according to claim 1, in which said objects (1) are each provided with a transport shuttle (7), in the area of their necks (2), characterised by the fact that it comprises :
- means (32) for causing the passage of said objects (1) intended to be equipped with shuttles (7) ;
- means (34) for causing the passage of said shuttles (7) intended to be disposed on said objects (1);
- means (36) for driving said shuttles (7) and said objects (1), facing one another, along a given path ;
- means (40) for securing said shuttles (7) to the necks (2) of said objects (1), capable of moving in a synchronised manner with said shuttles (7) and said objects (1), along said given path.
